# EUROPEAN PATENT SPECIFICATION

(11) **EP 0 634 581 B1**
(45) Date of publication and mention of the grant of the patent: **29.01.1997**
(21) Application number: 93202054.8
(22) Date of filing: 12.07.1993
(51) Int. Cl.: F16B 12/00

(54) **Plate assembly**
Plattenzusammenbau
Assemblage de plaques

(43) Date of publication of application: 18.01.1995
(73) Proprietor: AGFA-GEVAERT naamloze vennootschap, B-2640 Mortsel (BE)
(72) Inventor: Bogaerts, Constant c/o Agfa-Gevaert N.V. DIE 3800, B-2640 Mortsel (BE); Van Echelpoel, Eric c/o Agfa-Gevaert N.V. DIE 3800, B-2640 Mortsel (BE); Goossen, Henri c/o Agfa-Gevaert N.V. DIE 3800, B-2640 Mortsel (BE); Van Goethem, Luc c/o Agfa-Gevaert N.V. DIE 3800, B-2640 Mortsel (BE); Van Aken, Luc c/o Agfa-GevaertN.V. DIE 3800, B-2640 Mortsel (BE)

(56) References cited:
- FR-A- 1 299 687
- FR-A- 2 270 769
- US-A- 4 532 727
- US-A- 4 960 223

## Description

### FIELD OF THE INVENTION

This invention relates to a panel assembly, particularly suitable for use in apparatus.

### BACKGROUND OF THE INVENTION

Most apparatus as e.g. a photographic camera, a processor for exposed materials, an optoelectronic scanner, a xerographic copier or a thermal printer, are mounted within a generally rectangular housing, which may include a rectangular metal frame for supporting various parts of the apparatus.
In many of these apparatus, the mechanical geometry of the frame panels, especially the relative distance between them, is very important for guaranteeing a qualitative and reliable operation of said apparatus.

The frame of the apparatus thus has to be designed and manufactured within rather small and stable tolerances, thereby minimising the creation of disturbing splits between said panels. Thereabove the frame thus formed must have a geometry which requires no adjustment after it has been assembled and which is stable in time.

It is noted that it is well known to provide panel assemblies in which a first panel has an opening in an edge thereof which receives a tab on an edge of a second panel.

### OBJECT OF THE INVENTION

Accordingly it is an object of the present invention to provide an improved assembly of a first panel with a second panel in a well defined geometrical relationship such that the distance between said panels is correct in at least one direction, and this without the use of supplementary positioning means, or of complicated machining.

These and other objects of invention will become apparent from the following description.

### SUMMARY OF THE INVENTION

We now have found that the above objects can be achieved by providing an assembly of a first panel, comprising at least one (non closed) insertion opening extending inwardly of the panel from one edge thereof, and a second panel comprising at least one projecting tab extending outwardly of the panel from one edge thereof and fitting in said opening, characterised in that said tab has at least one shoulder located between the top and the base of said tab, with said shoulder abutting on said first panel, and with said one edge of the first panel remaining out of contact with said one edge of the second panel.

Embodiments of the present invention are set forth in the detailed description given hereinbelow.

### DETAILED DESCRIPTION OF THE INVENTION

The invention will be described with reference to the accompanying drawings without limiting the invention thereto, in which:
Fig. 1 is a schematic side view of an apparatusframe which comprises panel plates;
Fig. 2 is a fragmentary perspective view of an assembly according to the present invention;
Fig. 3 is a partial view of a preferred embodiment of an assembly of two panels with a perpendicular engagement according to the present invention;
Fig. 4 is a partial section of an assembly of two panels with a perpendicular engagement according to the present invention;
Fig. 5 is a further embodiment of an assembly with a perpendicular engagement comprising two projecting tabs in a same plane;
Fig. 6 is a partial view of a preferred embodiment of an assembly of two panels with a perpendicular engagement and situated at a Z-distance within panel 1;
Fig. 7 is a preferred embodiment of an assembly of two adjacent panels with a planar engagement according to the present invention;
Fig. 8 is a further embodiment of an assembly with a planar engagement comprising two projecting tabs in a same plane;
Fig. 9 gives a partial a section and a partial plan view of two adjacent panels on a common planar footplate;
Fig. 10 gives a partial plan view of three adjacent panels with a planar engagement according to the present invention;
Fig. 11 is a partial plan view of a second panel according to the present invention.

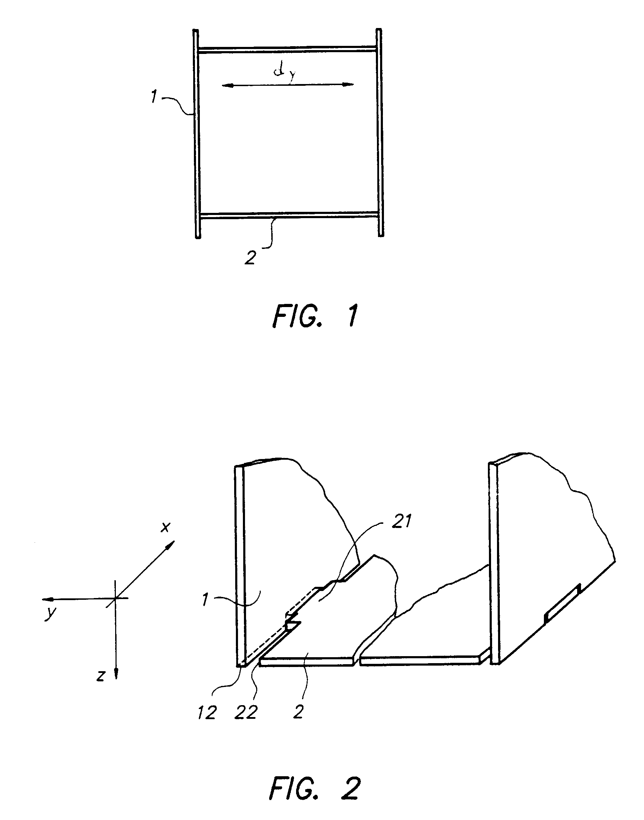

Reference is firstly made to Fig 1 in which there is illustrated a schematic side view of an apparatus with a frame comprising panel plates 1 and 2 which may be steel plates or the like.

Fig. 2 is a fragmentary perspective view of a set of panels 1 and 2 whose complementary shapes permit their assembly in an exact position. In order to attain a correct distance between both vertical panels (ref. d_{y} in Fig. 1), the assembly of Fig. 2 evidently may be applied twice, namely at both ends of the horizontal panel 2, more specifically, once at he left side of panel 2 and once at the right side of panel 2. In this Fig. 2, also a rectangular coordinate system is indicated as having a X, a Y and a Z axis. Further details will be explained in separate paragraphs and in reference to more detailed drawings.

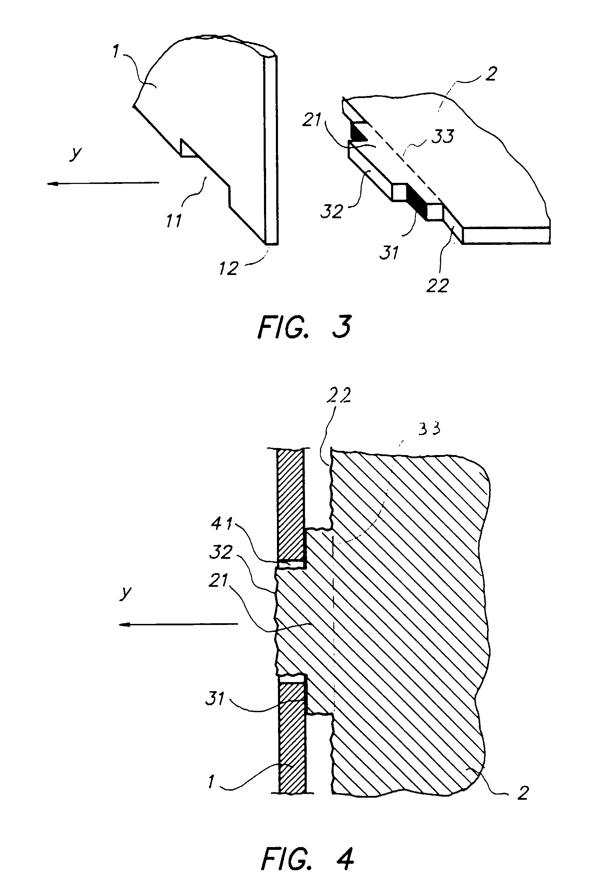

Referring to figure 3, which illustrates a first embodiment of the present invention with an assembly of two panels 1 and 2, panel 1 comprises at least one non closed insertion opening 11 extending inwardly of the panel 1 from one edge 12 thereof, and panel 2 comprises at least one projecting tab 21 extending outwardly of the panel 2 from one edge 22 thereof and fitting in said opening 11. As seen in Fig. 3, said projecting tab 21 has at least one shoulder 31 located between the top 32 of said tab 21 and the base 33 of said tab 21, which base 33 generally coincides with an edge 22 of panel 2.
As the projecting tab 21 is pushed into the insertion opening 11, panel 1 abuts on shoulder 31 of panel 2; herewith said one edge 12 of first panel 1 remains out of contact with said one edge 22 of second panel 22.

In order to facilitate the introduction of tab 21 into opening 11, the top of tab 21 may be chamfered or tapered (not shown). Generally, the heigth of the projecting tab 21 is defined by the distance between the top 32 and the base 33 of the tab. If the second panel 2 is in a plane perpendicular to the first panel 1, the heigth of the tab may be slightly greater than the thickness of panel 1, so that it will just project from the other side of panel 1 (as illustrated in Figs. 2,4,6).

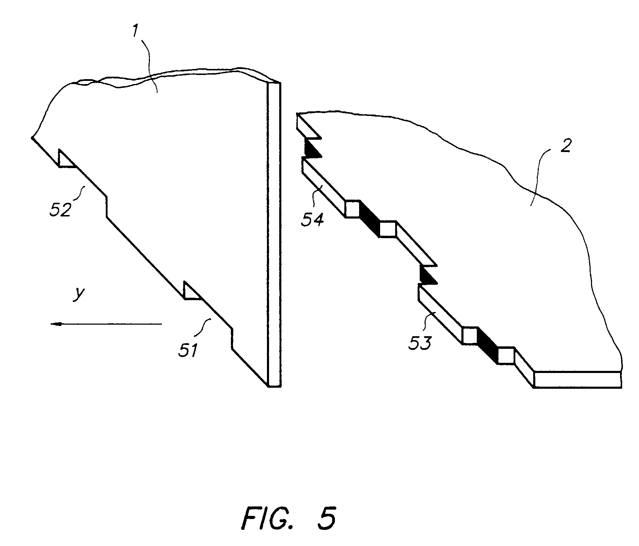

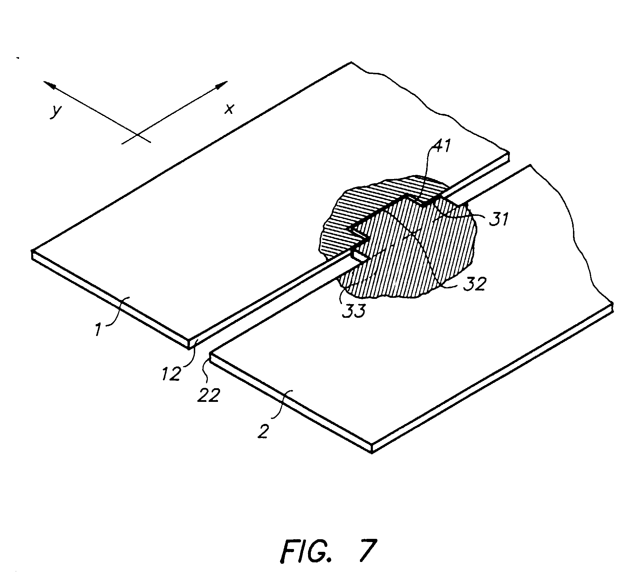

In order to attain a precise position of panel 2 with respect to panel 1 in the direction of the Y axis, being normal to the surface of shoulder 31, in most of the prior art, the machining tolerances of the panels are rather narrow. It is a surprising advantage of the present invention, that even with rather broad tolerances of the individual panels 1,2 still a high end accuracy of the total frame may be achieved. Indeed, it is only required for panel 2 that the shoulder(s) 31 (intentionally shadowed in full black in Figs. 3 and 5) should be punched with sufficient accuracy. The remaining faces which have no abutment nor positioning function (as e. g. the top 32, the base 33) may be of a normal precision as it results from usual punching tolerances. For panel 1, it is required that the "X-length" (representing the dimension in a direction according to the X axis) of opening 11 and the "Z-width" (representing the dimension in a direction according to the Z axis) of same opening(s) 11 are not smaller as the respective X-length and Z-width of the corresponding tab(s) 21 (see clearances 41 in Figs. 4 and 7 in the X direction and clearances 61 in Fig. 6 in the Z direction).

It may be clear from Fig. 4, which is a partial section of an assembly of two panels with a perpendicular engagement according to the present invention, that the disclosed assembly provides a simple construction which enables two panels to be assembled in a predictable position, despite variations in the thicknesses of said panel members and despite possible variations in the edge 22 of panel 2.

In the case of a perpendicular engagement between panels 1 and 2 (as illustrated in Figs. 1 to 6), according to the state of the art, usually an angled portion or a flange is bended at the end of panel 2. Said flange generally serves to make an abutting contact between panels 1 and 2, when fastened by e.g. a bolt connection. The prior art bending of panel 2 in order to make a flange, inherently causes bending tolerances, which are standardised in the e.g. the german DIN 6930. The present invention does not use any bending, but only a punching or cutting operation, which causes punching tolerances. Generally, these punching tolerances are about two times smaller as corresponding bending tolerances (for the same materials, thicknesses and lengths); which may be illustrated by DIN 6930, especially part II. Herefrom it results that the assembly according to the present invention has better length tolerances than the prior art. Hence, the distance between said panels 1 and 2 is correct in at least the Y-direction, and this without the use of supplementary positioning means, or of complicated machining.

In case of a clearance 41 between opening 11 and tab 21 reduced to nearly zero, the assembly of panels 1 and 2 would be positioned correctly in an additional direction (meaning the X-direction).

In a preferred embodiment of the present invention, the projecting tab 21 has two shoulder edges, formed by corresponding tab portions, one at each lateral side (meaning the X-direction) of said tab (see Figs. 2, 3 and 4).

In a further preferred embodiment of the present invention, see Fig. 5, the frame panels 1 and 2 may have more than one set of openings 11 and tabs 21, each set making an assembly as disclosed. Especially if the panels 1 and 2 are rather great, it is often advantageous, in order to align both panels precisely over their total length, that panel 2 has at least two tabs 53 and 54 situated substantially in a same plane and that panel 1 accordingly may comprise corresponding insertion openings 51 and 52.

From the foregoing teachings, it will be clear that the disclosure of the present invention may be applied in frame edges (as suggested by the introductory Fig. 1), but also at intermediate positions. Fig. 6 is a partial view of a preferred embodiment of an assembly of two panels with a perpendicular engagement and situated not strictly at an end of panel 1, but rather at some Z-distance (ref. 62) within said panel 1.

In a preferred embodiment of the present invention, the cross-sectional shape of the tab corresponds generally with the shape of the opening. Generally, both cross-sections may have a rectangular corresponding shape (indicated by referals 32 in Fig. 3 and by 53, 54 in Fig. 5) which guarantees a correct positional accuracy. Preferably, said tab is located in the plane of said second panel 2.

Therabove, the assembly further may comprise at least one fastening means (not yet shown) for securing said panels 1, 2 to each other and to inhibit relative movement of the plate members. Indeed, although the projecting tabs 21 engage tightly into the insertion openings 11, both panels 1,2 have to be held in correct and fixed operative engagement.

A particular embodiment of the present invention relates to the assembling of two adjacent panels 1 and 2, wherein said second panel 2 is in a plane parallel to the plane of said first panel 1. Fig. 7 is a preferred embodiment of an assembly of two adjacent panels in a same plane with an edge to edge contiguous and substantially planar engagement according to the present invention. As the identified elements of Fig. 7 are similar in structure and operation to those of the correspondingly numbered structural elements described in relation to Figs. 1 to 6, no further description is required.

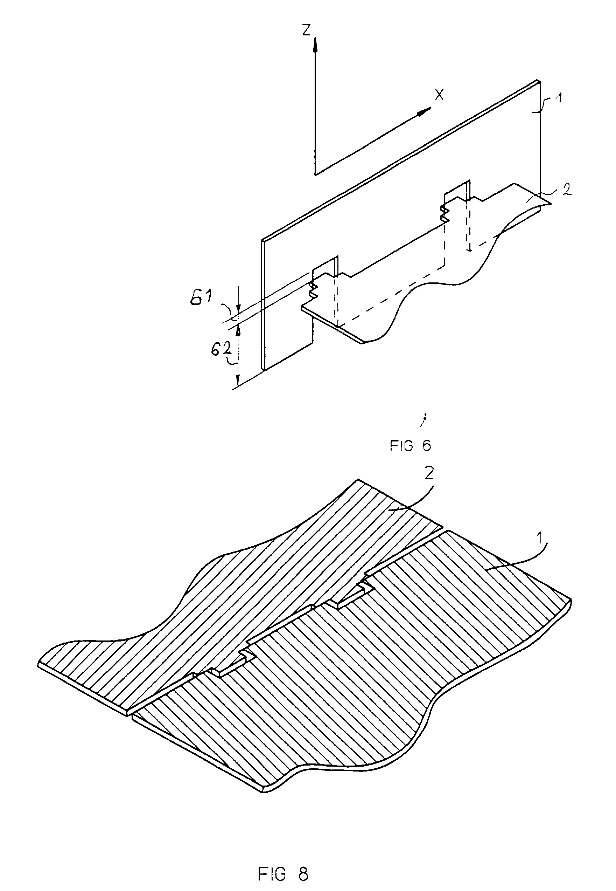

Fig. 8 illustrates a further embodiment of an assembly with a planar engagement comprising two projecting tabs and corresponding openings in a same plane.

Such embodiment, wherein said second panel 2 is in a plane coinciding with the plane of said first panel 1, could occasionally also be applied in jointly mounting at least a first unit (e.g. a feeder mechanisme for introducing blanco paper sheets) and a second unit (e.g. a xerographic copying unit) on a same footplate as a common reference to the overall apparatus.

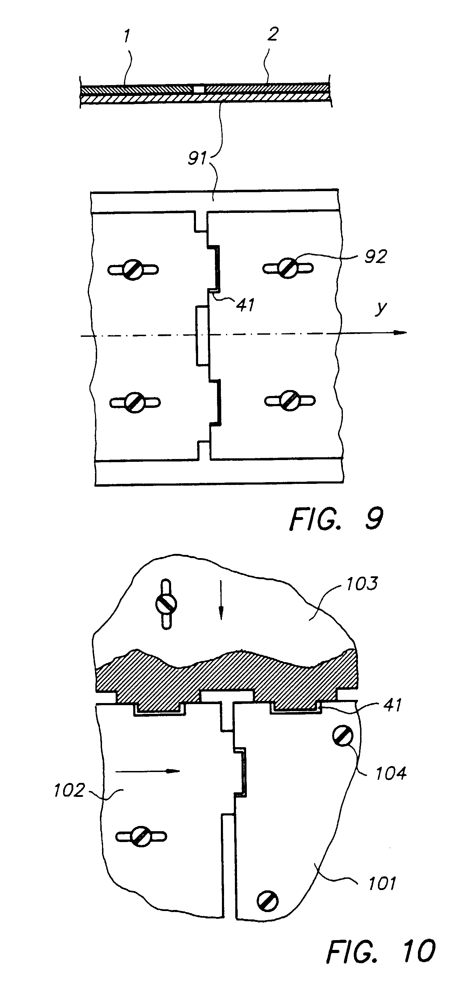

In Fig. 9, use is made of two panels 1 and 2 on a common footplate 91 and secured by fixing means 92.
In Fig. 10, use is made of three panels 101, 102 and 103 on a common footplate (not shown for sake of clarity) and secured by fixing means 104. In this figure 10, panel 101 is indicated as being fixed (cfr. means 104) and panels 102 and 103 abut with their respective shoulders with an edge to edge contiguous and substantially planar engagement.

Recalling the objects of the invention, it is very important to understrike the fact that the geometrical precision of the assembly is essentially given by punching techniques (cfr. shoulder edge 31 on projecting tab 21). In addition, the base line 33 of the tab or edge 22 of panel 2 essentially does not contact panel 1 and hence does not affect the positional precision of the panels.

From the foregoing teachings, it will be clear that the individual panels 1, 2, 91, 101, 102, 103 are not restricted to strict vertical nor strict horizontal positions.

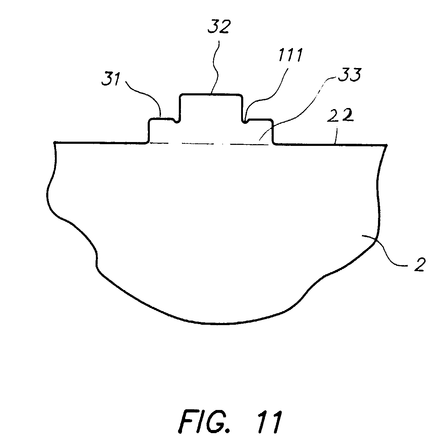

Fig. 11 shows a partial plan view of a second panel 2 after being punched. It is noted that panel 2 may have an undercut or recess 111 to facilitate the manufacturing of a precise shoulder edge 31.

Finally, it will be understood that the manufacturing of the plates, in particular of the cooperating tabs and openings, can also be carried out by other techniques than punching or diestamping, e.g. by lasercutting. The final precision of the assembly will depend on the manufacturing tolerances of such other technique.

## Claims

1. An assembly of a first panel (1), comprising at least one ((non closed)) insertion opening (11) extending inwardly of the panel (1) from one edge (12) thereof, and a second panel (2) comprising at least one projecting tab (21) extending outwardly of the panel (2) from one edge (22) thereof and fitting in said opening (11), characterised in that said tab (21) has at least one shoulder (31) located between the top (32) and the base (33) of said tab, with said shoulder (31) abutting on said first panel (1), and with said one edge (12) of the first panel (1) remaining out of contact with said one edge (22) of the second panel (2).

2. An assembly according to claim 1, wherein said second panel (2) is in a plane perpendicular to the plane of said first panel (1).

3. An assembly according to claim 1, wherein said second panel (2) is in a plane parallel to the plane of said first panel (1).

4. An assembly according to claim 1 or 3, wherein said second panel (2) is in a plane coinciding with the plane of said first panel (1).

5. An assembly according to any of claims 1 or 4, wherein the shape of said projecting tab (21) corresponds with the shape of said insertion opening (11).

6. An assembly according to any of claims 1 to 5, wherein said projecting tab (21) has two shoulder edges (31), formed by corresponding tab portions, one at each lateral side of the tab (21).

7. An assembly according to any of claims 1 to 6, wherein said second panel (2) has at least two projecting tabs (53, 54) lying substantially in a same plane and wherein said first panel comprises corresponding insertion openings (51, 52).

8. An assembly according to any of claims 1 to 7, wherein said tab (21) is located in the plane of said first panel (1).

9. An assembly according to any of claims 1 to 8, wherein said panels (1, 2) are made from sheet metal which has been punched.

10. An assembly according to any of claims 1 to 9, wherein said panels (1,2) are fixed to each other by a fastening means.

## Patentansprüche

1. Anordnung aus einer ersten Tafel (1), die mindestens eine ((nicht geschlossene)) Einsetzöffnung (11) aufweist, die von einem Rand (12) der Tafel (1) nach innen der Tafeln verläuft, und einer zweiten Tafel (2), die mindestens eine vorragende Nase (21), die sich von einem Rand (22) der Tafel nach außen der Tafel erstreckt und in die Öffnung (11) paßt, dadurch gekennzeichnet, daß die Nase (21) mindestens eine Schulter (31) aufweist, die sich zwischen dem oberen Ende (32) und dem Grund (33) der Nase befindet, wobei die Schulter (31) an der ersten Tafel (1) anstößt und wobei der eine Rand (12) der ersten Tafel (1) den einen Rand (22) der zweiten Tafel (2) nicht berührt.

2. Anordnung nach Anspruch 1, bei der sich die zweite Tafel (2) in einer Ebene befindet, die senkrecht zur Ebene der ersten Tafel (1) verläuft.

3. Anordnung nach Anspruch 1, bei der sich die zweite Tafel (2) in einer Ebene befindet, die parallel zur Ebene der ersten Tafel (1) verläuft.

4. Anordnung nach Anspruch 1 oder 3, bei der sich die zweite Tafel (2) in einer Ebene befindet, die mit der Ebene der ersten Tafel (1) zusammenfällt.

5. Anordnung nach Anspruch 1 oder 4, bei der die Form der vorragenden Nase (21) der Form der Einsetzöffnung (11) entspricht.

6. Anordnung nach einem der Ansprüche 1 bis 5, bei der die vorragende Nase (21) zwei Schulterränder (31) aufweist, die durch entsprechende Nasenteile gebildet werden, und zwar einen an jeder Querseite der Nase (21).

7. Anordnung nach einem der Ansprüche 1 bis 6, bei der die zweite Tafel (2) mindestens zwei vorragende Nasen (53, 54) aufweist, die in einer im wesentlichen gleichen Ebene liegen, und bei der die erste Tafel entsprechende Einsetzöffnungen (51, 52) umfaßt.

8. Anordnung nach einem der Ansprüche 1 bis 7, bei der sich die Nase (21) in der Ebene der ersten Tafel (1) befindet.

9. Anordnung nach einem der Ansprüche 1 bis 8, bei der die Tafeln (1, 2) aus gestanztem Blech hergestellt sind.

10. Anordnung nach einem der Ansprüche 1 bis 9, bei der die Tafeln (1, 2) durch ein Befestigungsmittel aneinander befestigt sind.

## Revendications

1. Assemblage d'un premier panneau (1), comprenant au moins une ouverture d'insertion (non fermée) (11) s'étendant vers l'intérieur du panneau (1) à partir d'un bord (12) de celui-ci, et d'un deuxième panneau (2) comprenant au moins une patte en saillie (21) s'étendant vers l'extérieur du panneau (2) à partir d'un bord (22) de celui-ci et s'emboîtant dans ladite ouverture (11), caractérisé en ce que ladite patte (21) a au moins un épaulement (31) situé entre le sommet (32) et la base (33) de ladite patte, ledit épaulement (31) venant buter sur ledit premier panneau (1), et ledit un bord (12) du premier panneau (1) restant hors de contact avec ledit un bord (22) du deuxième panneau (2).

2. Assemblage selon la revendication 1, dans lequel ledit deuxième panneau (2) est dans un plan perpendiculaire au plan dudit premier panneau (1).

3. Assemblage selon la revendication 1, dans lequel ledit deuxième panneau (2) est dans un plan parallèle au plan dudit premier panneau (1).

4. Assemblage selon la revendication 1 ou 3, dans lequel ledit deuxième panneau (2) est dans un plan coïncidant avec le plan dudit premier panneau (1).

5. Assemblage selon l'une quelconque des revendications 1 ou 4, dans lequel la forme de ladite patte en saillie (21) correspond à la forme de ladite ouverture d'insertion (11).

6. Assemblage selon l'une quelconque des revendications 1 à 5, dans lequel ladite patte en saillie (21) a deux bords d'épaulement (31), formés par des portions de patte correspondantes, un sur chaque côté latéral de la patte (21).

7. Assemblage selon l'une quelconque des revendications 1 à 6, dans lequel ledit deuxième panneau (2) a au moins deux pattes en saillie (53, 54) se trouvant substantiellement dans un même plan et dans lequel ledit premier panneau comprend des ouvertures d'insertion (51, 52) correspondantes.

8. Assemblage selon l'une quelconque des revendications 1 à 7, dans lequel ladite patte (21) est située dans le plan dudit premier panneau (1).

9. Assemblage selon l'une quelconque des revendications 1 à 8, dans lequel lesdits panneaux (1, 2) sont constitués de tôle qui a été découpée à l'emporte-pièce.

10. Assemblage selon l'une quelconque des revendications 1 à 9, dans lequel lesdits panneaux (1, 2) sont attachés l'un à l'autre par un moyen de fixation.
